# EUROPEAN PATENT APPLICATION

(11) **EP 4 742 024 A1**
(43) Date of publication of application: **13.05.2026**
(21) Application number: 24852091.8
(22) Date of filing: 10.07.2024
(51) Int. Cl.: G06F 3/04883, G06F 3/0482, G06F 3/04817, G06F 3/041, G06F 3/00

(54) **METHOD AND ELECTRONIC DEVICE FOR PROVIDING USER INTERACTION FOR STEREOSCOPIC ELEMENT**

(30) Priority: 08.08.2023 KR 20230103259; 07.11.2023 KR 20230152661
(71) Applicant: Samsung Electronics Co., Ltd., Suwon-si, Gyeonggi-do 16677 (KR)
(72) Inventor: LEE, Yongyeon, Suwon-si, Gyeonggi-do 16677 (KR); PARK, Jihae, Suwon-si, Gyeonggi-do 16677 (KR); LEE, Byunghwa, Suwon-si, Gyeonggi-do 16677 (KR); HAN, Hoon, Suwon-si, Gyeonggi-do 16677 (KR)
(74) Representative: HGF
(86) International application number: PCT/KR2024/009872
(87) International publication number: WO 2025/033735

(57) **Abstract**

An embodiment of the present invention may comprise: a display (160); a sensor module (176); a memory (130) for storing instructions; and a processor (120). The instructions, when executed by the processor, may cause an electronic device to: detect a user input for calling a control menu while a three-dimensional stereoscopic object is displayed on the display; display the control menu on the display in response to the detected user input; detect a touch selecting an option item of the control menu; detect movement of the electronic device by using the sensor module while the touch on the selected option item is maintained; and change a user interface displayed on the display on the basis of the detected movement of the electronic device when the touch on the selected option item is released.

## Description

### [Technical Field]

Various embodiments of the disclosure provide a method and an electronic device for providing user interaction for a stereoscopic element.

### [Background Art]

With the development of digital technology, various types of electronic devices such as mobile communication terminals, personal digital assistants (PDAs), electronic notebooks, smart phones, tablet personal computers (PCs), and wearable devices are widely used. To support and enhance functions of such electronic devices, the hardware and/or software of the electronic devices are continuously improved.

For example, an electronic device may control execution of the electronic device or an application or perform a function using a web-based service through a user's voice command by using voice recognition technology. Alternatively, the electronic device may connect to a wireless input/output device (e.g., earphone or headphone) through short-range wireless communication such as Bluetooth, and may output the sound of music or a video through the wireless input/output device. Alternatively, the electronic device (e.g., a smartphone) may be connected to a wearable display device (e.g., AR glasses) to provide extended reality (XR) content such as virtual reality (VR), augmented reality (AR), and/or mixed reality (MR) content.

The above information may be presented as related art for the purpose of assisting in understanding the disclosure. No assertion or decision is made as to whether any of the above might be applicable as prior art with regard to the disclosure.

### [Disclosure of Invention]

### [Technical Problem]

An embodiment may provide a method and device for providing a control menu configured to enable a user to operate an electronic device with one hand without obscuring a three-dimensional object displayed on a display of the electronic device, and changing a user interface through the control menu.

### [Solution to Problem]

An electronic device 101 according to an embodiment of the disclosure may include a display 160, a sensor module 176, a memory 130 configured to store instructions, and a processor 120. The instructions, when executed by the processor, may cause the electronic device to detect a user input for invoking a control menu while a three-dimensional (stereoscopic) object is displayed on the display, display the control menu on the display in response to the detected user input, detect a touch selecting an option item of the control menu, detect movement of the electronic device by using the sensor module while the touch on the selected option item is maintained, and change a user interface displayed on the display based on the detected movement of the electronic device in case that the touch on the selected option item is released.

A method for operating the electronic device 101 according to an embodiment of the disclosure may include detecting a user input for invoking a control menu while a three-dimensional (stereoscopic) object is displayed on the display 160 of the electronic device, displaying the control menu on the display in response to the detected user input, detecting a touch selecting an option item of the control menu, detecting the movement of the electronic device by using the sensor module 176 of the electronic device while the touch on the selected option item is maintained, and changing a user interface displayed on the display, based on the detected movement of the electronic device in case that the touch on the selected option item is released.

### [Advantageous Effects of Invention]

According to an embodiment, a display may be controlled without obscuring a three-dimensional element.

According to an embodiment, a three-dimensional element may be controlled conveniently without obscuring the three-dimensional element while holding an electronic device with one hand.

According to an embodiment, an environment in which a user interaction may be performed without being affected by a field of view for a three-dimensional element may be provided, thereby improving the usability of an electronic device.

### [Brief Description of Drawings]

FIG. 1 is a block diagram of an electronic device in a network environment according to an embodiment.
FIG. 2 is a diagram illustrating an example of controlling a three-dimensional object in an electronic device according to an embodiment.
FIG. 3 is a flowchart illustrating an operation method of an electronic device according to an embodiment.
FIG. 4 is a diagram illustrating an example of invoking a control menu in an electronic device according to an embodiment.
FIG. 5A is a diagram illustrating an example of selecting a depth movement of a control menu in an electronic device according to an embodiment.
FIG. 5B is a diagram illustrating an example of selecting a camera view change in a control menu in an electronic device according to an embodiment.
FIG. 5C is a diagram illustrating an example of selecting a screen movement of a control menu in an electronic device according to an embodiment.
FIG. 6 is a flowchart illustrating a method of controlling a user interface through a control menu of an electronic device according to an embodiment.
FIG. 7 is a diagram illustrating an example of selecting a control menu to change a user interface in an electronic device according to an embodiment.
FIGS. 8A to 8C are diagrams illustrating an example of selecting a three-dimensional object through a control menu in an electronic device according to an embodiment.
FIGS. 9A and 9B are diagrams illustrating an example of selecting a three-dimensional object through a control menu in an electronic device according to an embodiment.
FIGS. 10A to 10C are diagrams illustrating an example of selecting a three-dimensional object through a control menu in an electronic device according to an embodiment.
FIG. 11 is a flowchart illustrating a method of selecting a three-dimensional object through a control menu of an electronic device according to an embodiment.
FIG. 12A is a diagram illustrating an example of selecting a depth movement of a control menu in a VR mode of an electronic device according to an embodiment.
FIG. 12B is a diagram illustrating an example of selecting a camera view change of a control menu in a VR mode of an electronic device according to an embodiment.
FIG. 12C is a diagram illustrating an example of selecting a screen movement of a control menu in a VR mode of an electronic device according to an embodiment.

### [Mode for the Invention]

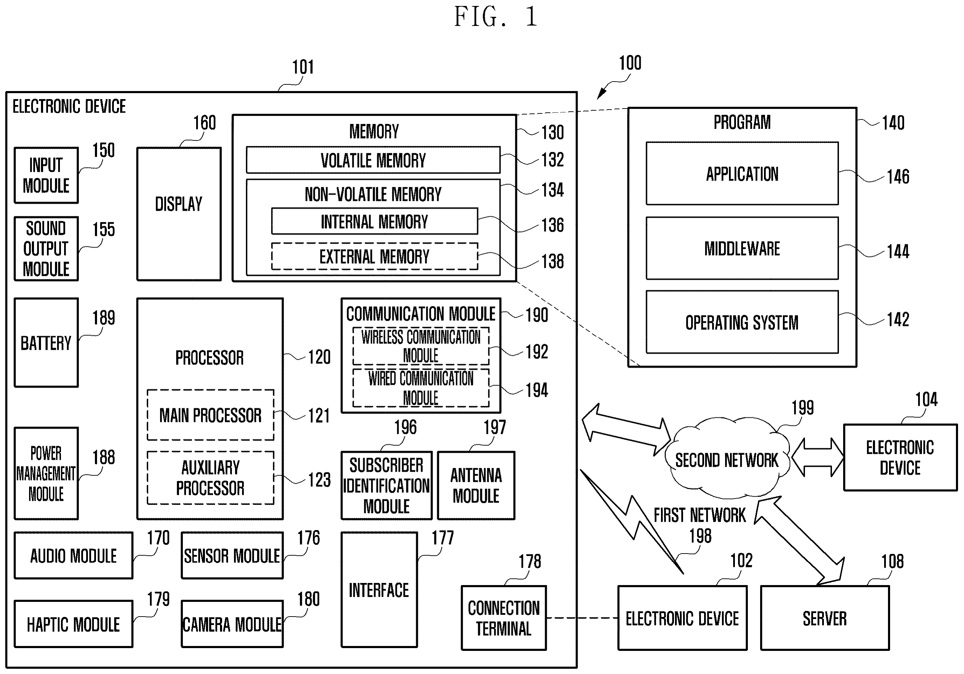

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

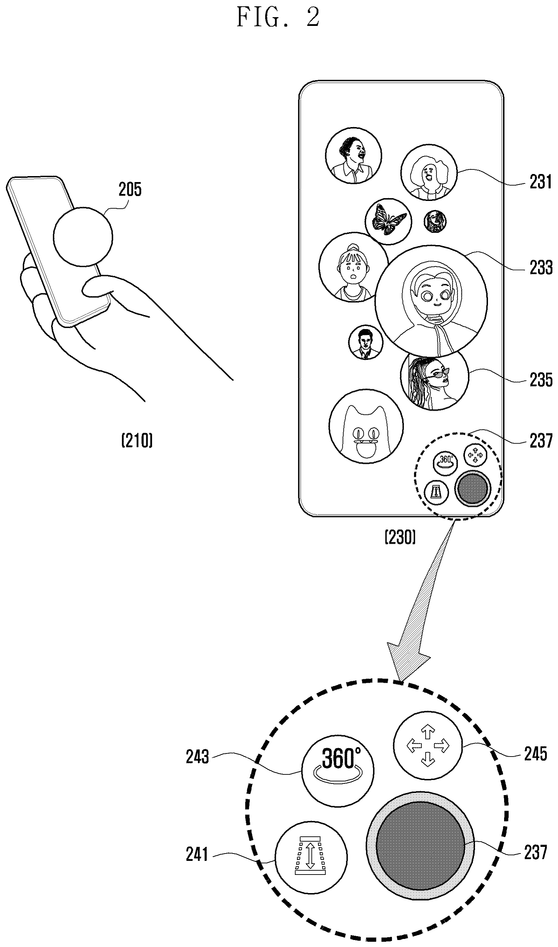

FIG. 2 is a diagram illustrating an example of controlling a three-dimensional object in an electronic device according to an embodiment.

Referring to FIG. 2, a processor (e.g., the processor 120 in FIG. 1) of an electronic device (e.g., the electronic device 101 in FIG. 1) according to an embodiment may provide a first user interface 210 including a three-dimensional object 205. The first user interface 210 may be displayed on a display (e.g., the display 160 in FIG. 1) of the electronic device 101. The three-dimensional object 205 may be an object that displays content corresponding to the object on the display 160 in a three-dimensional manner, like virtual reality. The object may include an icon of an application included in the home screen or content (e.g., a text, an image, and a video) included in an execution screen of an application (e.g., a contact application and a gallery application). The first user interface 210 is provided to help in understanding the disclosure, and hereinafter, the objects 231, 233, and 235 included in a second user interface 230 are displayed as two-dimensional images, but the objects 231, 233, and 235 included in the second user interface 230 may be displayed (or expressed) as three-dimensional objects 205 as in the first user interface 210.

The processor 120 may display the second user interface 230 including a control menu 237 on the display 160 in response to a user input for invoking the control menu. The second user interface 230 may further include a pointer (or cursor) (e.g., a cross shape) for selecting a three-dimensional object. The pointer may be displayed in a designated area (e.g., the center) of the display 160. The second user interface 230 may include multiple objects 231, 233, and 235 and the control menu 237. The multiple objects 231, 233, and 235 may be displayed as a three-dimensional objects 205 of the first user interface 210. The multiple objects 231, 233, and 235 may be displayed based on different depth information (or depth values). The depth information may indicate a z-axis coordinate value in an x, y, and z-axis coordinate system.

For example, the x-axis and y-axis coordinates may represent a two-dimensional coordinate system, where the x-axis may represent horizontal information (e.g., left and right) on a screen, and the y-axis may represent vertical information (e.g., top and bottom) on the screen. The z-axis coordinate may represent a three-dimensional coordinate system, and the z-axis may be a depth value on a screen and may also be expressed as a layer. The second object 233 may correspond to the first depth information (or first layer), and the first object 231 and the third object 235 may correspond to the second depth information (or second layer). That is, the first object 231 and the third object 235 may have the same depth value. The first depth information may be different from the second depth information, and the first depth information may be disposed higher in depth (e.g., closer to the user) than the second depth information.

The control menu 237 may be displayed two-dimensionally or may be displayed three-dimensionally as the multiple objects 231, 233, and 235. The control menu 237 may include at least one option item, and for example, may include at least one of a depth movement item 241, a camera view change item 243, or a screen panning item 245. Screen panning may refer to moving or switching the screen upward, downward, leftward, or rightward. In addition, the control menu 237 may further include a touch area for object selection. Although the control menu is illustrated as including three option items in the drawings, the control menu may include fewer (e.g., two) or more option items.

The depth movement item 241 may be used to change depth (or layer) information (e.g., z-axis coordinate value) of an object displayed on the display 160. The processor 120 may adjust the depth values of multiple objects included in the second user interface 230, based on a movement of the electronic device 101, while the user maintains a touch on the depth movement item 241. Here, the movement of the electronic device 101 may be acquired (or detected) by using a sensor module (e.g., the sensor module 176 in FIG. 1) included in the electronic device 101. For example, the sensor module 176 may include a 6-axis sensor obtained by combining a gyroscope sensor and an acceleration sensor, or a 9-axis sensor obtained by combining a gyroscope sensor, an acceleration sensor, and a geomagnetic sensor.

The processor 120 may adjust (or change) the depth values of the multiple objects included in the second user interface 230, based on a pitch value (e.g., first sensing data) of the sensor data acquired by the sensor module 176. The pitch value (or tilt value) may indicate a rotation about an axis on a horizontal plane perpendicular to the direction of movement of the electronic device 101. According to an embodiment, in case that the touch is moved up and down while maintaining (e.g., touch-holding) a user input for the depth movement item 241 (e.g., touch drag), the processor 120 may adjust (or change) the depth values of multiple objects included in the second user interface 230, based on the touch movement moving up and down.

The camera view change item 243 may be to change the user interface displayed on the display 160 according to a camera view change. The processor 120 may change the camera view, based on a pitch value or a yaw value (e.g., second sensing data) from the sensor data acquired by the sensor module 176, and change the second user interface 230, based on the changed camera view. The yaw value may refer to a rotation about an axis in a vertical plane that is perpendicular to the direction of movement of the electronic device 101. The user interface may be displayed differently according to the camera view, and a user interface corresponding to the camera view may be stored in the memory (e.g., the memory 130 in FIG. 1) of the electronic device 101.

The screen panning item 245 may be to change the user interface displayed on the display 160 upward, downward, leftward, or rightward according to at least one of an x-axis movement value, a y-axis movement value, a pitch value, or a yaw value (e.g., third sensing data). Screen panning may refer to moving or switching the screen upward, downward, leftward, or rightward. The size of the user interface may be larger than the screen size of the display 160. By means of the screen panning item 245, in case that the user moves the electronic device 101 upward, downward, leftward, or rightward, an object (or area) that is not displayed on the display 160 may appear on the display or an object displayed on the display 160 may disappear from the display.

The processor 120 may touch an option item in the control menu, change and display a user interface based on a movement of the electronic device 101 while the touch is maintained, and, if the touch is released, fix the changed value (e.g., a display value related to the user interface) of the option item applied when the touch is released. The user may move the electronic device 101 to make at least one three-dimensional object to correspond to the pointer (e.g., be aligned in the x, y, and z-axis directions). The aligning may indicate that at least one three-dimensional object is aligned (or positioned in a straight line) in the x, y, and z-axis directions. After the touch is released, in case that a three-dimensional object corresponds to the pointer, the processor 120 may select the three-dimensional object corresponding to the pointer, and execute a function corresponding to the selected three-dimensional object.

According to an embodiment, the processor 120 may touch an option item in the control menu, and may change and display a user interface, based on a movement of the touch (e.g., touch drag or touch swipe) while the touch is maintained.

An electronic device according to an embodiment of the disclosure may include a display 160, a sensor module 176, a memory 130 configured to store instructions, and a processor 120. The instructions, when executed by the processor, may cause the electronic device to detect a user input for invoking a control menu while a three-dimensional (stereoscopic) object is displayed on the display, display the control menu on the display in response to the detected user input, detect a touch selecting an option item of the control menu, detect the movement of the electronic device by using the sensor module while the touch on the selected option item is maintained, and change the user interface displayed on the display, based on the detected movement of the electronic device, in case that the touch on the selected option item is released.

The instructions, when executed by the processor, may cause the electronic device to display the control menu in a corner edge area of the display in response to the detected user input, and display a pointer at the center of the display.

The instructions, when executed by the processor, may cause the electronic device to, in case that a depth movement is selected as an option item of the control menu, acquire first sensing data in the depth direction from the sensor module, and change the depth information of a three-dimensional object displayed on the display according to the touch release, based on the acquired first sensing data.

The instructions, when executed by the processor, may cause the electronic device to, in case that a camera view change is selected as an option item in the control menu, acquire second sensing data in the depth direction from the sensor module, change a camera view based on the acquired second sensing data, and change the user interface based on the changed camera view.

The instructions, when executed by the processor, may cause the electronic device to, in case that a screen panning is selected as an option item in the control menu, acquire third sensing data from the sensor module and change the user interface based on the acquired third sensing data.

The instructions, when executed by the processor, may cause the electronic device to, in case that a three-dimensional object corresponds to the pointer based on the acquired sensing data, select the three-dimensional object.

The instructions, when executed by the processor, may cause the electronic device to, in case that the touch on the selected option item is released, execute a function corresponding to the selected three-dimensional object.

The instructions, when executed by the processor, may cause the electronic device to, in case that a three-dimensional object is positioned adjacent to a highlight area corresponding to the pointer, select the positioned three-dimensional object, based on the acquired sensing data, and in case that the touch release is detected, execute a function corresponding to the selected three-dimensional object.

The instructions, when executed by the processor, may cause the electronic device to move the three-dimensional object disposed adjacent to the highlight area to the highlight area, and in case that the three-dimensional object is aligned in the highlight area, select the three-dimensional object.

The instructions, when executed by the processor, may cause the electronic device to move a first three-dimensional object disposed adjacent to the highlight area to the highlight area, and move the position of a second three-dimensional object displayed on the display, based on the movement of the first three-dimensional object.

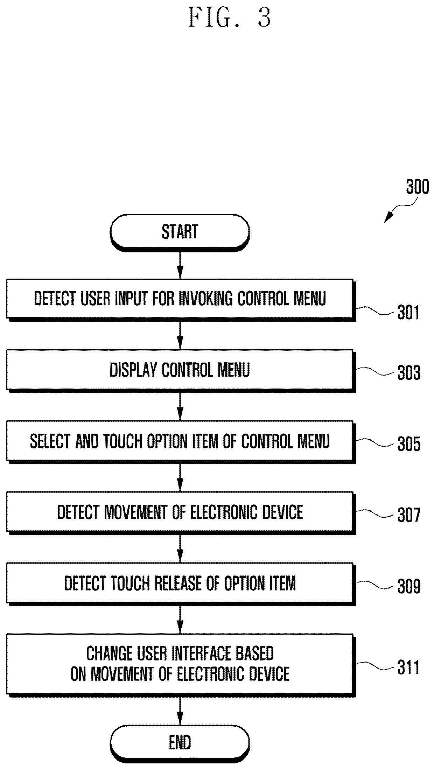

FIG. 3 is a flowchart 300 illustrating an operation method of an electronic device according to an embodiment.

Referring to FIG. 3, in operation 301, a processor (e.g., the processor 120 in FIG. 1) of an electronic device (e.g., the electronic device 101 in FIG. 1) according to an embodiment may detect a user input for invoking a control menu. The processor 120 may detect a user input for invoking a control menu while displaying a user interface (e.g., the second user interface 230 in FIG. 2) including at least one three-dimensional object. The user input may include a touch input for dragging (or swiping) from a bezel area of the electronic device 101 toward the display of the electronic device 101 (e.g., the display 160 in FIG. 1). For example, the user input may refer to a user interaction in which a touch is started in a bezel area corresponding to a corner of the electronic device 101 and then moved inward toward the display 160. The user input for invoking the control menu may be preconfigured as a default of the electronic device 101 or may be preconfigured by a user input. The user input for invoking the control menu may correspond to a previously designated user interaction.

In operation 303, the processor 120 may display a control menu on the display 160. The control menu may be an item for controlling a user interface including at least one three-dimensional object. The control menu (e.g., the control menu 237 in FIG. 2) may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2). The control menu may be displayed two-dimensionally plane or may be displayed three-dimensionally. The processor 120 may display a pointer (or cursor) (e.g., a cross-shaped pointer) for selecting a three-dimensional object on the display 160 together with the control menu.

In operation 305, the processor 120 may detect the selection and touch of an option item of the control menu. The option item of the control menu may refer to at least one of a depth movement item 241, a camera view change item 243, or a screen panning item 245. Here, screen panning may refer to moving or switching a screen upward, downward, leftward, or rightward. The processor 120 may detect a user input for selecting (e.g., touching) at least one of the depth movement item 241, the camera view change item 243, and the screen panning item 245, and detect that the detected user input is maintained (e.g., touch hold). For example, the user may touch the depth movement item 241 and maintain the touch.

In operation 307, the processor 120 may detect the movement of the electronic device 101. The processor 120 may detect the movement of the electronic device 101 while the user input for selecting the option item of the control menu is maintained. The movement of the electronic device 101 may be acquired (or detected) by using a sensor module (e.g., the sensor module 176 in FIG. 1) included in the electronic device 101. For example, the sensor module 176 may include a 6-axis sensor obtained by combining a gyroscope sensor and an acceleration sensor or a 9-axis sensor obtained by combining a gyroscope sensor, an acceleration sensor, and a geomagnetic sensor. The user may move the electronic device 101 while maintaining the user input for selecting the option item without releasing the user input.

According to an embodiment, the processor 120 may use (or extract) sensing data obtained by the movement of the electronic device 101 differently, based on the selected option item. For example, in case that the depth movement item 241 is selected as an option item by the user, the processor 120 may acquire a pitch value among the sensing data. In case that the camera view change item 243 is selected as an option item by the user, the processor 120 may acquire a pitch value or a yaw value among the sensing data. In case that the screen panning item 245 is selected as an option item by the user, the processor 120 may acquire at least one of an x-axis movement value, a y-axis movement value, a pitch value, or a yaw value among the sensing data.

According to an embodiment, the processor 120 may obtain all (e.g., x-axis movement value, y-axis movement value, pitch value, yaw value, and roll value) of sensing data acquired by the movement of the electronic device 101 from the sensor module 176, and may selectively use the sensing data, based on the selected option item. For example, in case that the depth movement item 241 is selected as an option item by the user, the processor 120 may use a pitch value among the sensing data. In case that the camera view change item 243 is selected as an option item by the user, the processor 120 may use a pitch value or a yaw value among the sensing data. In case that the screen panning item 245 is selected as an option item by the user, the processor 120 may use at least one of an x-axis movement value, a y-axis movement value, a pitch value, or a yaw value among the sensing data.

According to an embodiment, the processor 120 may touch an option item in the control menu, and while the touch is maintained, may change and display the user interface based on a movement (e.g., touch drag or touch swipe) of the touch. In operation 309, the processor 120 may detect a touch release of the option item. For example, in case that the user moves the electronic device 101 while maintaining a user input for selecting the option item without releasing the user input, the processor 120 may acquire sensing data obtained by the movement of the electronic device 101. In case that the user input for selecting the option item is released, the processor 120 may stop acquiring (or using, extracting) the sensing data obtained by the movement of the electronic device 101.

In operation 311, the processor 120 may change the user interface based on the movement of the electronic device 101. For example, while the depth movement item 241 is touched and the touch is maintained, the processor 120 may change and display, based on the movement of the electronic device 101, depth (or layer) information (e.g., z-axis coordinate value) of at least one three-dimensional object displayed on the display 160. While the camera view changing item 243 is touched and the touch is maintained, the processor 120 may change the camera shooting view based on the movement of the electronic device 101, and may change and display the user interface displayed on the display 160 according to the changed camera view. While the screen panning item 245 is touched and the touch is maintained, the processor 120 may change and display the user interface upward, downward, leftward, or rightward based on the movement of the electronic device 101. The processor 120 may display an object (or screen area) which has not been displayed on the display 160 according to the movement of the electronic device 101 upward, downward, leftward, or rightward by a user, or may not display an object which has been displayed on the display 160.

According to an embodiment, the processor 120 may select at least one three-dimensional object displayed on the display 160, based on the movement of the electronic device 101, and execute a function corresponding to the selected object. In case that a touch is released while a three-dimensional object is included in a designated area (e.g., a pointer area) of the display 160, the processor 120 may determine that the three-dimensional object has been selected. For example, in case that the selected three-dimensional object is a contact (e.g., a phone number), the processor 120 may attempt to make a call to the contact. Alternatively, in case that the selected three-dimensional object is a photograph, the processor 120 may display the photograph on the entire area of the display 160. In case that a three-dimensional object is included in a designated area of the display 160, the processor 120 may inform (e.g., notify) that the three-dimensional object is selectable.

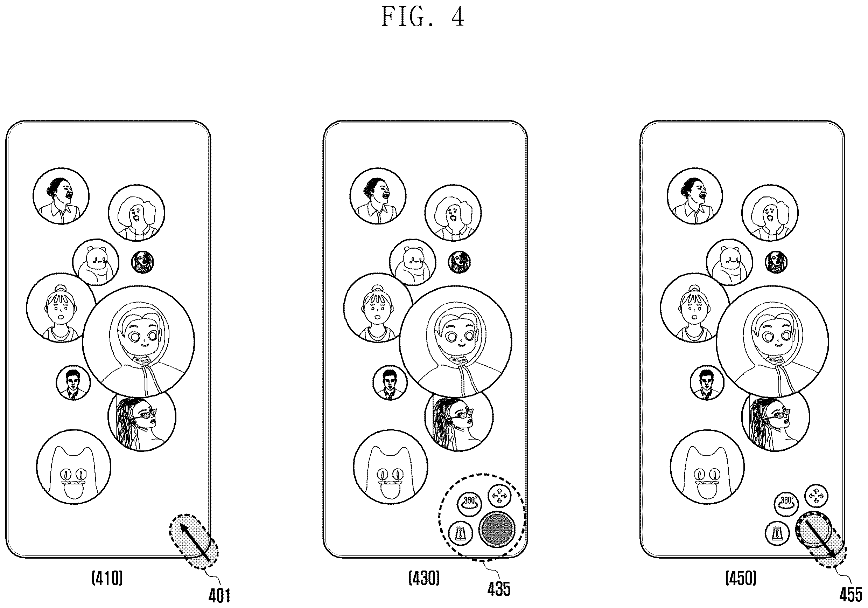

FIG. 4 is a diagram illustrating an example of invoking a control menu in an electronic device according to an embodiment.

Referring to FIG. 4, a processor (e.g., the processor 120 in FIG. 1) of an electronic device (e.g., the electronic device 101 in FIG. 1) according to an embodiment may detect a user input 401 for invoking a control menu while a first user interface 410 is displayed on a display (e.g., the display 160 in FIG. 1). The first user interface 410 may include at least one three-dimensional object (e.g., an object displayed in a circle). The user input 401 may include a touch input for dragging (or swiping) from a bezel area of the electronic device 101 toward the display (e.g., the display 160 in FIG. 1) of the electronic device 101. For example, the user input 401 may indicate that a touch is started in the bezel area corresponding to the lower left corner of the electronic device 101 and then the touch is moved inward toward the display 160. Alternatively, the user input 401 may refer to a user interaction in which a touch is started in a bezel area corresponding to at least one of the lower right corner, the upper left corner, and the upper right corner of the electronic device 101 and the touch is moved inward toward the display 160.

In response to the user input 401, the processor 120 may display a second user interface 430 on the display 160. The second user interface 430 may include at least one three-dimensional object, a pointer (e.g., a cross shape), and a control menu 435. The control menu 435 may be displayed two-dimensionally or may be displayed three-dimensionally. The control menu 435 may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2). In addition, the control menu 435 may further include a touch area for selecting an object. Although the control menu is illustrated as including three option items in the drawings, the control menu may include fewer (e.g., two) or more option items.

The processor 120 may detect a second user input 455 for deleting the control menu 435 while displaying the second user interface 430. Referring to a third user interface 450, the second user input 455 may be a user interaction in which a touch is moved from the corner inside the display 160 to the bezel area of the electronic device 101, which is opposite to the user input 401 for invoking the control menu 435. The processor 120 may provide a user interface (e.g., the first user interface 410) in which the control menu 435 is deleted, in case that the second user input 455 is detected. According to an embodiment, the second user input 455 may include a user interaction in which a touch is started from at least one of a lower right corner, an upper left corner, and an upper right corner of the display 160 and is then moved toward the bezel area, that is, in a direction toward the outside of the display 160.

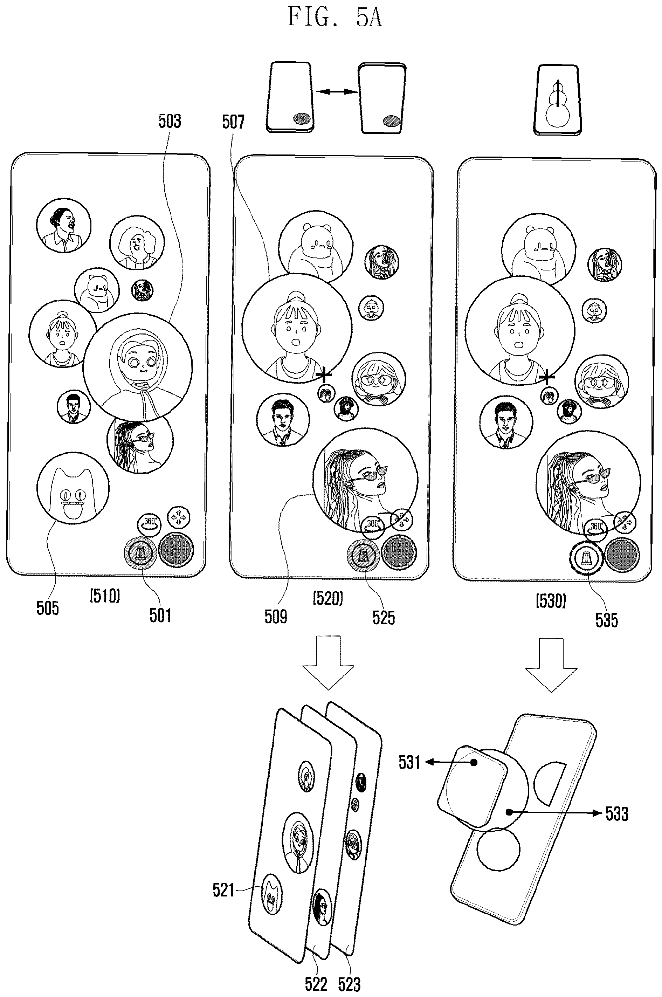

FIG. 5A is a diagram illustrating an example of selecting a depth movement of a control menu in an electronic device according to an embodiment.

Referring to FIG. 5A, a processor (e.g., the processor 120 in FIG. 1) of an electronic device (e.g., the electronic device 101 in FIG. 1) according to an embodiment may display a first user interface 510 on a display (e.g., the display 160 in FIG. 1). The first user interface 510 may include at least one three-dimensional object (e.g., 503 and 505) and a control menu. A first three-dimensional object 503 and a second three-dimensional object 505 may correspond to first depth information (e.g., z-axis coordinate values, depth information). The control menu may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2). The processor 120 may detect a user input 501 for selecting a depth movement item while the first user interface 510 is displayed. A user may move the electronic device 101 while maintaining the user input 501 (e.g., a touch hold or touch maintenance). In other words, the user may move the electronic device 101 forward or backward from the user, or move the electronic device 101 upward, downward, leftward, or rightward with respect to the user. The processor 120 may detect the movement of the electronic device 101 in response to the user input 501.

The processor 120 may display a second user interface 520, based on the movement of the electronic device 101. The processor 120 may detect the movement of the electronic device 101 by using a sensor module (e.g., the sensor module 176 in FIG. 1) included in the electronic device 101. For example, in case that the electronic device 101 is moved while a user input 525 for selecting the depth movement item is maintained, the processor 120 may display the second user interface 520, based on the pitch value of the sensing data. The second user interface 520 may include a third three-dimensional object 507 and a fourth three-dimensional object 509 corresponding to the second depth information. According to an embodiment, while maintaining (e.g., touch hold) the user input 501 for selecting a depth movement item, the processor 120 may display the second user interface 520, based on a movement (e.g., upper and lower drags) of the user input 501.

For example, the first user interface 510 may include at least one three-dimensional object corresponding to three different pieces of depth information 521, 522, and 523. For example, the first three-dimensional object 503 and the second three-dimensional object 505 may correspond to the first depth information 521 (or the first layer), the third three-dimensional object 507 and the fourth three-dimensional object 509 may correspond to the second depth information 522 (or the second layer), and at least one fifth three-dimensional object may correspond to the third depth information 523 (or the third layer). The first depth information 521 may be disposed at a higher (e.g., closer to the user) depth than the second depth information 522, and the second depth information 522 may be disposed at a higher (e.g., closer to the user) depth than the third depth information 523.

The first user interface 510 may be a user interface in which a three-dimensional object is disposed based on the first depth information 521, and the second user interface 520 may be a user interface in which a three-dimensional object is disposed based on the second depth information 522. In case that the electronic device 101 is tilted backward from the user (e.g., the electronic device 101 is moved away from the user) while the first user interface 510 is displayed in a state in which the user input 525 for selecting the depth movement item is maintained, the processor 120 may display the second user interface 520, based on the pitch value of the sensing data. Alternatively, in case that the electronic device 101 is tilted forward by the user (e.g., the electronic device 101 is closer to the user) while the second user interface 520 is displayed in a state in which the user input 525 for selecting the depth movement item is maintained, the processor 120 may display the first user interface 510, based on the pitch value of the sensing data.

The processor 120 may display a third user interface 530 in case that the user input of touching the depth movement item is released 535 in a state in which the second user interface 520 is displayed. The third user interface 530 may be a user interface in which the screen is fixed with a three-dimensional object disposed based on the second depth information 522. For example, the third user interface 530 may be a user interface in which a three-dimensional object 533 is moved to a designated area 531 so that the three-dimensional object 533 is selected.

According to an embodiment, in a state of displaying the second user interface 520, in case that a user input of double tapping on the depth movement item is detected, the processor 120 may display the first user interface 510. That is, in case that a user input of double tapping a depth movement item is detected while the processor 120 changes the user interface (e.g., the second user interface 520) based on the movement of the electronic device 101 and displays the changed user interface, the processor may initialize a change value related to the change in the user interface, thereby returning to the initial screen (e.g., the first user interface 510).

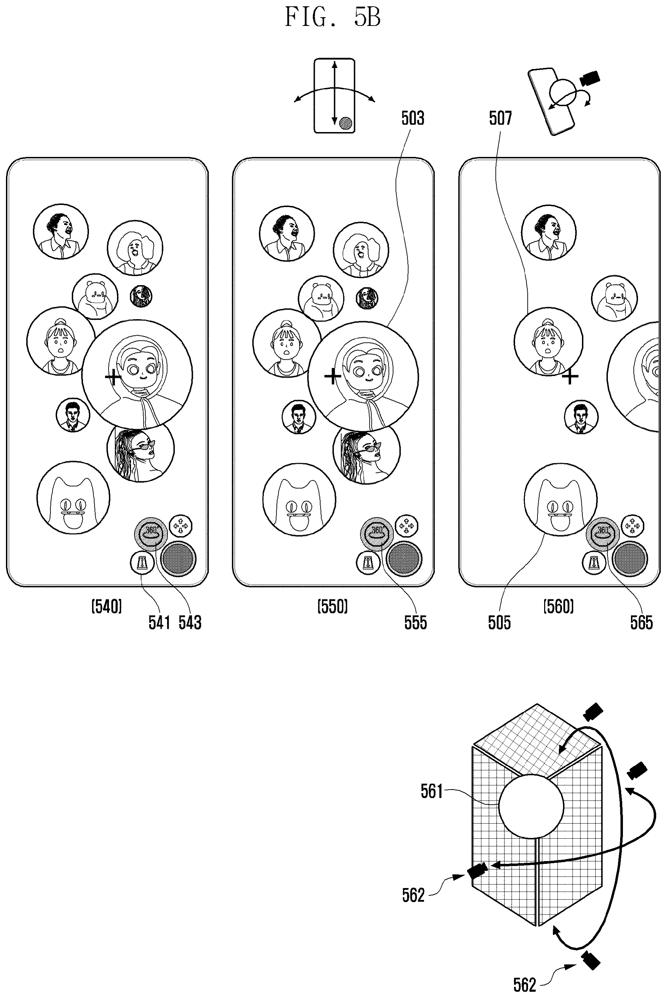

FIG. 5B is a diagram illustrating an example of selecting a camera view change of a control menu in an electronic device according to an embodiment.

Referring to FIG. 5B, a processor 120 may display a fourth user interface 540 on a display 160. The processor 120 may release a user input for selecting a depth movement item 541 while a fourth user interface 540 is displayed, and may receive a user input for selecting a camera view movement item 543. The fourth user interface 540 may include at least one three-dimensional object and a control menu. A fifth user interface 550 illustrates an example in which the camera view movement item 543 of the control menu is selected.

The user may move the electronic device 101 while maintaining an input of touching a camera view movement item 555. For example, in case that the electronic device 101 is moved in a state in which a user input for selecting a camera view movement item is maintained 565, the processor 120 may display a sixth user interface 560, based on a pitch value or a yaw value of the sensing data. The processor 120 may change a user interface displayed on the display 160 according to a camera 562 view change. The display value of a three-dimensional object 561 included in the user interface may be changed according to the camera 562 view. The sixth user interface 560 may be a user interface in which a camera view is changed, in comparison with the fifth user interface 550.

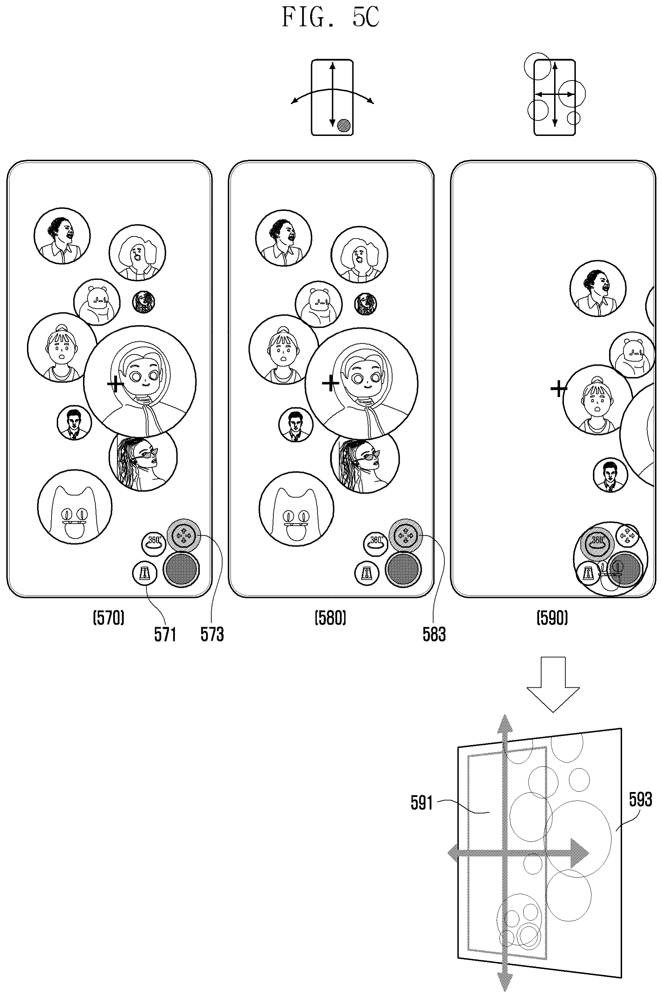

FIG. 5C is a diagram illustrating an example of selecting a screen movement of a control menu in an electronic device according to an embodiment.

Referring to FIG. 5C, a processor 120 may display a seventh user interface 570 on a display 160. The processor 120 may release a user input for selecting a depth movement item 571 while the seventh user interface 570 is displayed, and may receive a user input for selecting a screen panning item 573. The seventh user interface 570 may include at least one three-dimensional object and a control menu. An eighth user interface 580 illustrates an example in which the screen panning item 573 of the control menu is selected.

While the input of touching a screen panning item 583 is maintained, the user may move the electronic device 101. For example, in case that the electronic device 101 is moved in a state in which the user input for selecting the screen panning item 583 is maintained, the processor 120 may display a ninth user interface 590, based on at least one of an x-axis movement value, a y-axis movement value, a pitch value, or a yaw value of the sensing data. The processor 120 may change a user interface displayed on the display 160 in accordance with a screen movement. The processor 120 may display an object (or area) that has not been displayed on the display 160 or may not display an object that has been displayed on the display 160, in response to the user moving the electronic device 101 upward, downward, leftward, or rightward. In comparison with the eighth user interface 580, the ninth user interface 590 may be a user interface in which some of objects 593 displayed on the screen are removed and the area 591 which has not been displayed on the screen is displayed.

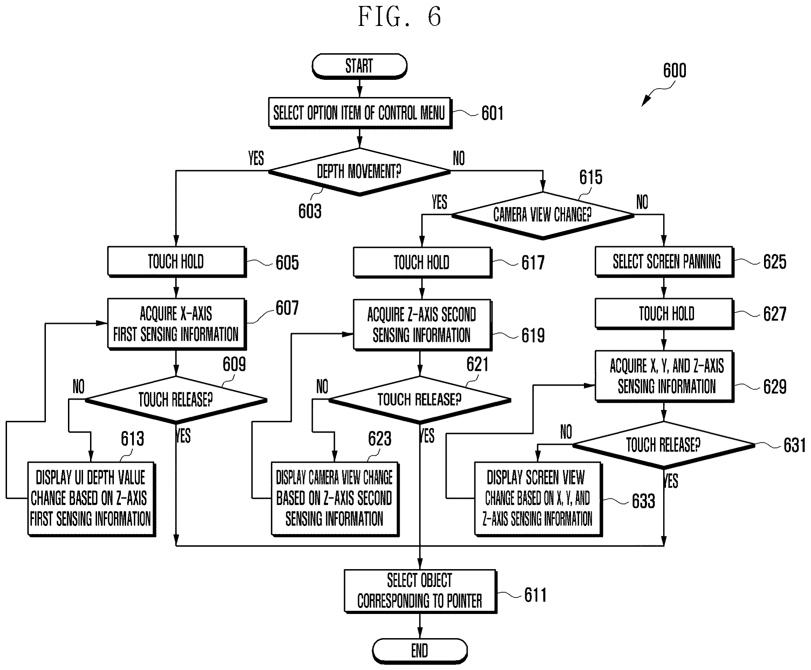

FIG. 6 is a flowchart 600 illustrating a method of controlling a user interface through a control menu of an electronic device according to an embodiment. FIG. 6 may be a detailed description of operations 305 to 311 in FIG. 3.

Referring to FIG. 6, in operation 601, a processor (e.g., the processor 120 in FIG. 1) of an electronic device (e.g., the electronic device 101 in FIG. 1) according to an embodiment may select an option item of a control menu. The control menu may be an item for controlling a user interface including at least one three-dimensional object. The control menu (e.g., the control menu 237 in FIG. 2) may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2). The control menu may be displayed two-dimensionally, or may be displayed three-dimensionally. The processor 120 may display a pointer (or cursor) at the center of the display (e.g., the display 160 in FIG. 1) along with the control menu. In order to select a desired three-dimensional object, the user may select at least one of the depth movement item, the camera view change item, or the screen panning item.

Below, although operation 603 of selecting the depth movement item 241 is described as being performed first, and operation 615 of selecting the camera view changing item 243 or operation 625 of selecting the screen panning item 245 is described as being performed later, operation 615 or operation 625 may be performed simultaneously (or in parallel) with operation 603. Alternatively, operations 603, 615, and 625 may be performed in any order, operation 615 may be performed before operation 603, or operation 625 may be performed before operation 603. The drawings are provided to help understand the disclosure, and the disclosure is not limited by the drawings.

In operation 603, the processor 120 may determine whether the selected option item is a depth movement item. The processor 120 may perform operation 605 in case that the selected option item is a depth movement item, and may perform operation 615 in case that the selected option item is not a depth movement item.

In case that the selected option item is a depth movement item, in operation 605, the processor 120 may detect a touch hold. The processor 120 may detect that the depth movement item is touched by the user and that the touch is maintained. According to an embodiment, the user may touch the depth movement item and release the touch. In case that the user releases the touch without maintaining the touch on the depth movement item, the processor 120 may determine whether another option item of the control menu is selected (e.g., touched). Hereinafter, a situation in which a user input for selecting a depth movement item is not released but is maintained may be described by way of an example.

In operation 607, the processor 120 may acquire (or identify) z-axis first sensing information. The processor 120 may obtain the z-axis first sensing information while the touch on the depth movement item is maintained. The z-axis first sensing information may include a pitch value.

In operation 609, the processor 120 may determine whether the touch on the depth movement item is released. In a state in which the touch on the depth movement item is maintained, the user may move the electronic device 101 to make a three-dimensional object to correspond to a pointer. In case that the touch on the depth movement item is released, the processor 120 may perform operation 611, and in case that the touch on the depth movement item is not released, the processor 120 may perform operation 613.

In case that the touch on the depth movement item is released, in operation 611, the processor 120 may select an object (e.g., a three-dimensional object) corresponding to a pointer (e.g., disposed in parallel in the x, y, and z-axis directions). Alternatively, the processor 120 may select an object corresponding to the pointer in case that the touch on the camera view change item is released. In operation 631, the processor 120 may select an object corresponding to the pointer in case that the touch on the screen panning item is released. In case that the pointer is positioned at the center of the three-dimensional object, the processor 120 may determine that the three-dimensional object has been selected. The processor 120 may execute a function corresponding to the selected three-dimensional object.

According to an embodiment, in case that no three-dimensional object corresponds to the pointer, the processor 120 may select at least one three-dimensional object adjacent to the pointer. For example, the processor 120 may control the three-dimensional object which is closest to the pointer in the x and y distances, so as to be aligned with the pointer in the x, y, and z-axis directions.

In case that the touch on the depth movement item is not released, in operation 613, the processor 120 may change and display a depth value of a user interface (UI) based on z-axis first sensing information. In case that the electronic device 101 is moved in a state in which the selection of the depth movement item is maintained (e.g., a touch hold), the processor 120 may change and display a depth value of a user interface (UI) based on the z-axis first sensing information. After performing operation 613, the processor 120 may return to operation 607, continue to acquire z-axis first sensing information, and change and display a user interface, based on the acquired z-axis first sensing information, until the touch is released.

In case that the selected option item is not the depth movement item, in operation 615, the processor 120 may determine whether the selected option item is a camera view change item. In case that the selected option item is a camera view change item, the processor 120 may perform operation 617, and in case that the selected option item is not a camera view change item, the processor 120 may perform operation 625.

In case that the selected option item is a camera view change item, the processor 120 may detect a touch hold in operation 617. The processor 120 may detect that the camera view change item is touched by the user and the touch is maintained. According to an embodiment, the user may touch the camera view change item and release the touch. In case that the user does not maintain the touch on the camera view change item, but releases the touch, the processor 120 may determine whether another option item of the control menu is selected (e.g., touched). Hereinafter, a situation in which a user input for selecting a camera view change item is maintained without being released may be described by way of an example.

In operation 619, the processor 120 may acquire (or identify) a z-axis second sensing information. The processor 120 may acquire the Z-axis second sensing information in a state in which the touch on the camera view change item is maintained. The Z-axis second sensing information may include a pitch value or a yaw value.

In operation 621, the processor 120 may determine whether the touch on the camera view change item is released. In a state in which the touch on the camera view change item is maintained, the user may move the electronic device 101 to make a three-dimensional object to correspond to the pointer. In case that the touch on the camera view change item is released, the processor 120 may perform operation 611, and in case that the touch on the camera view change item is not released, the processor 120 may perform operation 623.

In case that the touch on the camera view change item is not released, in operation 623, the processor 120 may change and display the camera view, based on the Z-axis second sensing information. In case that the electronic device 101 is moved while the selection of the camera view change item is maintained (e.g., touch hold), the processor 120 may change the camera view based on the z-axis second sensing information, and change and display a user interface based on the changed camera view. After performing operation 623, the processor 120 may return to operation 619 and continue to acquire the z-axis second sensing information, and may change and display the user interface, based on the acquired z-axis second sensing information, until the touch is released.

In case that the selected option item is not the camera view change item, in operation 625, the processor 120 may identify that a screen panning item is selected as the selected option item.

In case that the selected option item is a screen panning item, in operation 627, the processor 120 may detect a touch hold. The processor 120 may detect that the screen panning item is touched by a user and the touch is maintained. According to an embodiment, the user may touch the screen panning item and release the touch. In case that the user does not maintain the touch on the screen panning item and releases the touch, the processor 120 may determine whether another option item of the control menu is selected (e.g., touched). Hereinafter, a situation in which a user input for selecting a screen panning item is maintained without being released may be described by way of an example.

In operation 629, the processor 120 may acquire (or identify) x, y, and z-axis sensing information. The processor 120 may acquire x, y, and z-axis sensing information in a state in which the touch on the screen panning item is maintained. The x, y, and z axis sensing information may include at least one of an x-axis movement value, a y-axis movement value, a pitch value, or a yaw value.

In operation 631, the processor 120 may determine whether a touch on the screen panning item is released. In a state in which the touch on the screen panning item is maintained, the user may move the electronic device 101 to make a three-dimensional object to correspond to the pointer. In case that the touch on the screen panning item is released, the processor 120 may perform operation 611, and in case that the touch on the screen panning item is not released, the processor 120 may perform operation 633.

In case that the touch on the screen panning item is not released, in operation 633, the processor 120 may change and display the screen view, based on x, y, and z-axis sensing information. In case that the electronic device 101 is moved in a state in which the selection of the screen panning item is maintained (e.g., touch hold), the processor 120 may change and display the user interface, based on the x, y, and z-axis sensing information. After performing operation 633, the processor 120 may return to operation 629 to continue acquiring x, y, and z-axis sensing information, and may change and display a user interface based on the acquired x, y, and z-axis sensing information until the touch is released.

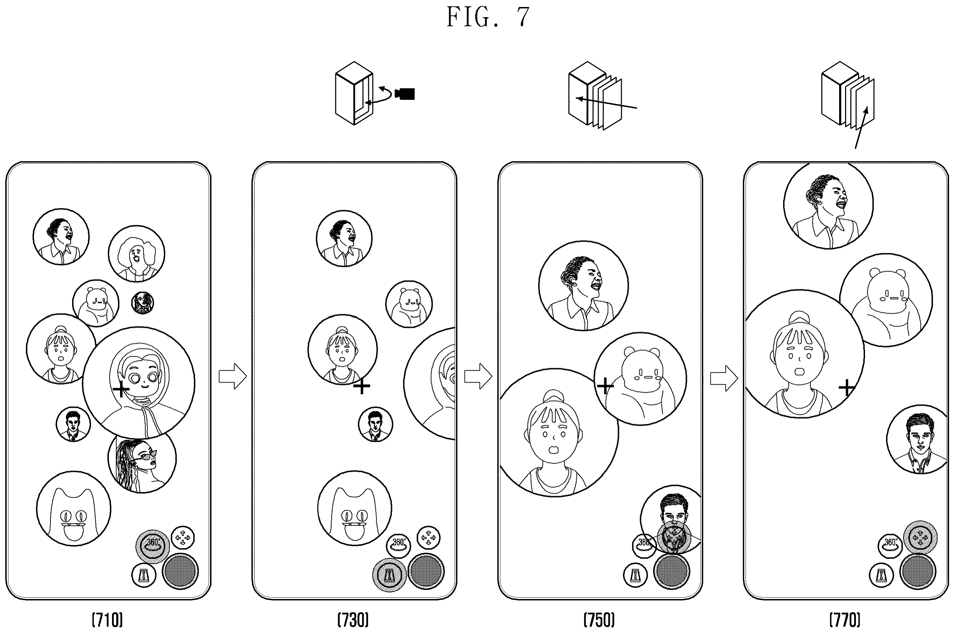

FIG. 7 is a diagram illustrating an example of selecting a control menu to change a user interface in an electronic device according to an embodiment.

Referring to FIG. 7, a processor (e.g., the processor 120 in FIG. 1) of an electronic device (e.g., the electronic device 101 in FIG. 1) according to an embodiment may display a first user interface 710 on a display (e.g., the display 160 in FIG. 1). The first user interface 710 may include multiple three-dimensional objects, a pointer, and a control menu. The processor 120 may select at least one option item of the control menu, based on a user input, while the first user interface 710 is displayed. In order to select a desired three-dimensional object, the user may select at least one of the depth movement item, the camera view change item, or the screen panning item.

For example, the processor 120 may display a second user interface 730 in case that the camera view change item (e.g., the camera view change item 243 in FIG. 2) is selected in the first user interface 710. In case that the camera view change item 243 is touched and that the movement of the electronic device 101 is detected in a state in which the touch is maintained, the processor 120 may change the camera view, based on a pitch value or a yaw value acquired from the sensor module (e.g., the sensor module 176 in FIG. 1) of the electronic device 101, and may change the user interface, to correspond to the changed camera view.

The processor 120 may display a third user interface 750 in case that a depth movement item (e.g., the depth movement item 241 in FIG. 2) is selected in the second user interface 730. A user interface corresponding to the changed camera view may be the third user interface 750. In order to select a desired three-dimensional object, the user may complexly select the camera view change item 243 and the depth movement item 241. In case that the depth movement item 241 is touched and that the movement of the electronic device 101 is detected in a state in which the touch is maintained, the processor 120 may change a user interface, based on a pitch value acquired by the sensor module 176.

The processor 120 may display a fourth user interface 770 in case that a screen panning item (e.g., the screen panning item 245 in FIG. 2) is selected in the third user interface 750. The changed user interface in the third user interface 750 may be the fourth user interface 770. In order to select a desired three-dimensional object, the user may complexly select the camera view change item 243, the depth movement item 241, and the screen panning item 245. In case that the screen panning item 245 is touched and that the movement of the electronic device 101 is detected in a state in which the touch is maintained, the processor 120 may change the user interface, based on at least one of an x-axis movement value, a y-axis movement value, a pitch value, or a yaw value acquired by the sensor module 176.

Although the camera view change item 243, the depth movement item 241, and the screen panning item 245 are sequentially selected in FIG. 7, the depth movement item 241 may be selected, and then the screen panning item 245 may be selected, or the camera view change item 243 may be selected, and then the screen panning item 245 may be selected. The example in FIG. 7 illustrates an example in which an option item of a control menu is complexly selected in order to select a three-dimensional object desired by a user, and the disclosure is not limited by the drawings and descriptions.

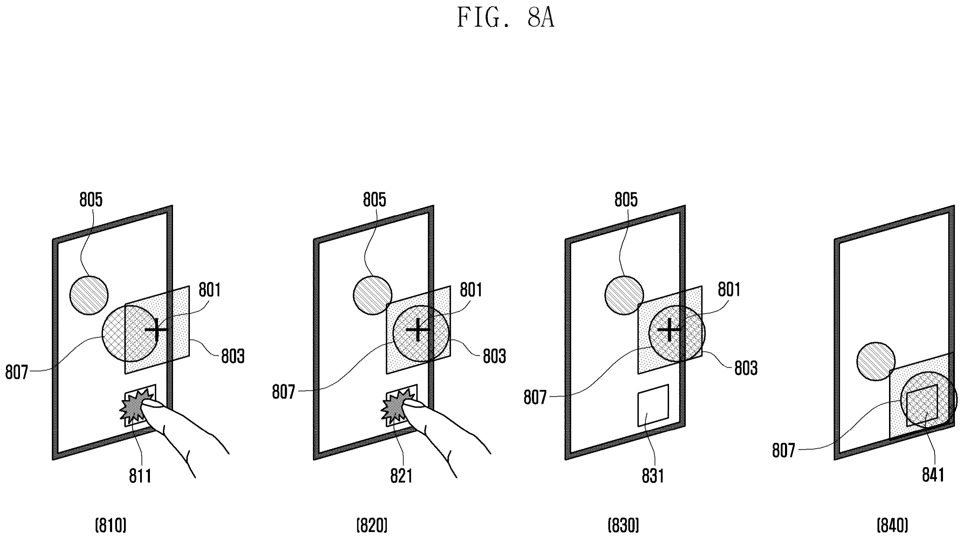

FIGS. 8A to 8C are diagrams illustrating an example of selecting a three-dimensional object through a control menu in an electronic device according to an embodiment.

Referring to FIG. 8A, a processor (e.g., the processor 120 in FIG. 1) of an electronic device (e.g., the electronic device 101 in FIG. 1) according to an embodiment may detect a user input for a designated touch area 811 of a control menu while a first user interface 810 is displayed on a display (e.g., the display 160 in FIG. 1). The first user interface 810 may include a pointer 801, a first three-dimensional object 805, or a second three-dimensional object 807. The first three-dimensional object 805 or the second three-dimensional object 807 may include an icon of an application included in the home screen or content (e.g., text, an image, or a video) included in an execution screen of an application (e.g., a contact application or a gallery application).

The designated touch area 811 of the control menu may be an area excluding an area corresponding to an option item of the control menu. A highlight area 803 is an area corresponding to the pointer 801, and the user may move the electronic device 101 to make a three-dimensional object to correspond to the highlight area 803.

For example, the processor 120 may detect the movement of the electronic device 101 in a state in which a touch on the touch area 811 designated in the first user interface 810 is maintained. The processor 120 may display a second user interface 820, based on the movement (e.g., z-direction movement) of the electronic device 101. The second user interface 820 may be a user interface in which a z-axis position of the first three-dimensional object 805 or the second three-dimensional object 807 is changed. For example, the second user interface 820 may illustrate an example in which the second three-dimensional object 807 is included in the highlight area 803. While the second user interface 820 is displayed in a state in which a touch on a designated touch area 821 is maintained, the processor 120 may detect the movement of the electronic device 101.

The user may release a touch on the designated touch area 831 in case that the second three-dimensional object 807 is included in the highlight area 803. In case that the touch on the designated touch area 831 is released, the processor 120 may display a third user interface 830. In case that the second three-dimensional object 807 is included in the highlight area 803 as in the third user interface 830, the processor 120 may determine that the second three-dimensional object 807 has been selected and may perform a function corresponding to the second three-dimensional object 807. For example, in case that the second three-dimensional object 807 is a message of a message application, the processor 120 may display the selected message on the entire area of the display 160.

Alternatively, as in a fourth user interface 840, the user may move the electronic device 101 to make the second three-dimensional object 807 to correspond to a designated touch area 841 of a control menu. In case that the second three-dimensional object 807 corresponds to the designated touch area 841 of the control menu, the processor 120 may determine that the second three-dimensional object 807 has been selected, and may perform a function corresponding to the second three-dimensional object 807.

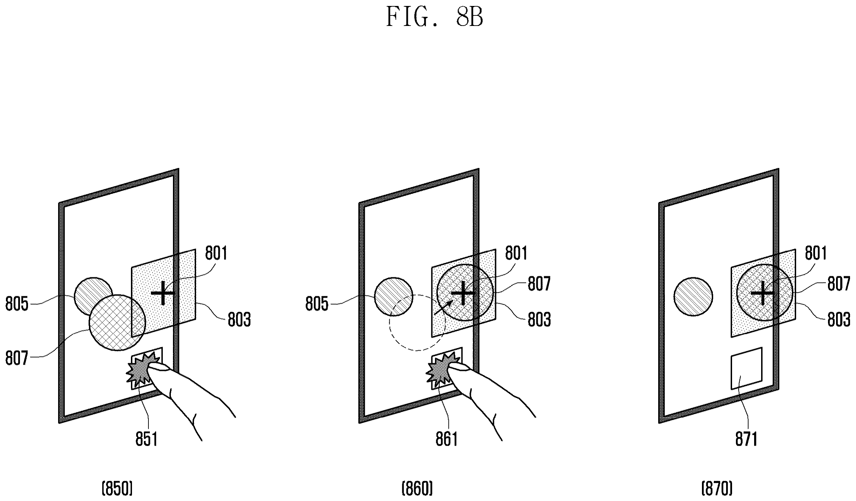

Referring to FIG. 8B, the processor 120 may detect a user input for a designated touch area 851 of a control menu while a fifth user interface 850 is displayed on a display 160. The fifth user interface 850 may include a pointer 801, a first three-dimensional object 805, or a second three-dimensional object 807. The first three-dimensional object 805 or the second three-dimensional object 807 may include an icon of an application included in the home screen, or content (e.g., text, image, and video) included in the execution screen of an application (e.g., a contact application and a gallery application). A highlight area 803 may be an area corresponding to the pointer 801, and the user may move the electronic device 101 to make a three-dimensional object to correspond to the highlight area 803.

For example, the processor 120 may detect a movement of the electronic device 101 while a touch on the designated touch area 851 in the fifth user interface 850 is maintained. The processor 120 may display a sixth user interface 860, based on the movement (e.g., z-direction movement) of the electronic device 101. For example, the sixth user interface 860 may illustrate an example in which the second three-dimensional object 807 corresponding to a first layer (e.g., first depth information) in a z-axis direction is automatically included in the highlight area 803. While the touch on the designated touch area 861 is maintained, the processor 120 may select the second three-dimensional object 807 adjacent to (e.g., with the shortest x, y distance from) the pointer 801 and may move the second three-dimensional object 807 to the highlight area 803.

In the fifth user interface 850, the second three-dimensional object 807 is closer to the pointer 801 than the first three-dimensional object 805, and thus the processor 120 may select the second three-dimensional object 807. In case that a touch on the designated touch area 871 is released, the processor 120 may display a seventh user interface 870. In case that the second three-dimensional object 807 is included in the highlight area 803 as in the seventh user interface 870, the processor 120 may determine that the second three-dimensional object 807 has been selected, and may perform a function corresponding to the second three-dimensional object 807.

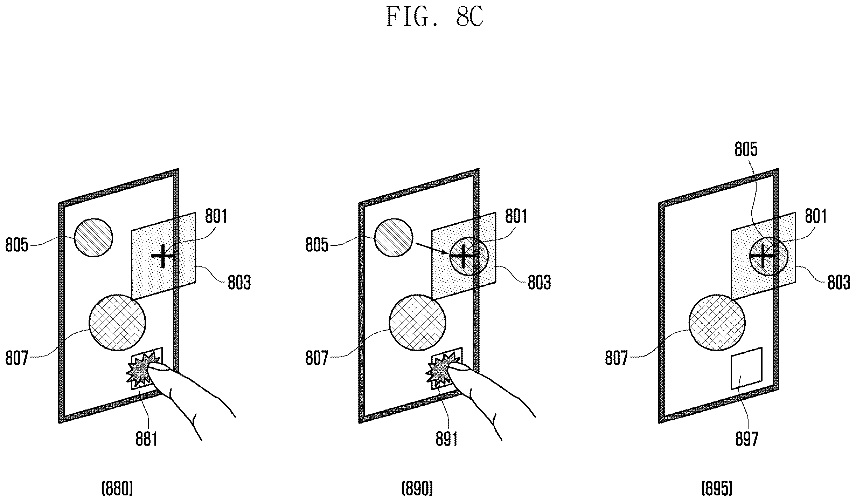

Referring to FIG. 8C, the processor 120 may detect a user input for a designated touch area 881 of a control menu while an eighth user interface 880 is displayed on a display 160. The eighth user interface 880 may include a pointer 801, a first three-dimensional object 805, or a second three-dimensional object 807. The highlight area 803 may be an area corresponding to the pointer 801, and the user may move the electronic device 101 to make a three-dimensional object to correspond to the highlight area 803.

For example, the processor 120 may detect the movement of the electronic device 101 in a state in which the touch on the designated touch area 881 in the eighth user interface 880 is maintained. The processor 120 may display a ninth user interface 890, based on the movement (e.g., z-direction movement) of the electronic device 101. For example, the ninth user interface 890 may be an example illustrating that a first three-dimensional object 805 corresponding to a second layer (e.g., second depth information) in the z-axis direction is automatically included in the highlight area 803. While a touch on the designated touch area 861 is maintained, the processor 120 may select a first three-dimensional object 805 adjacent to (e.g., having the smallest x and y distances from) the pointer 801 and may move the first three-dimensional object 805 to the highlight area 803.

In the eighth user interface 880, the first three-dimensional object 805 is closer to the pointer 801 than the second three-dimensional object 807, and thus the processor 120 may select the first three-dimensional object 805. In case that a touch on a designated touch area 891 is released, the processor 120 may display a tenth user interface 895. In case that the first three-dimensional object 805 is included in the highlight area 803 as in the tenth user interface 895, the processor 120 may determine that the first three-dimensional object 805 has been selected, and may perform a function corresponding to the first three-dimensional object 805.

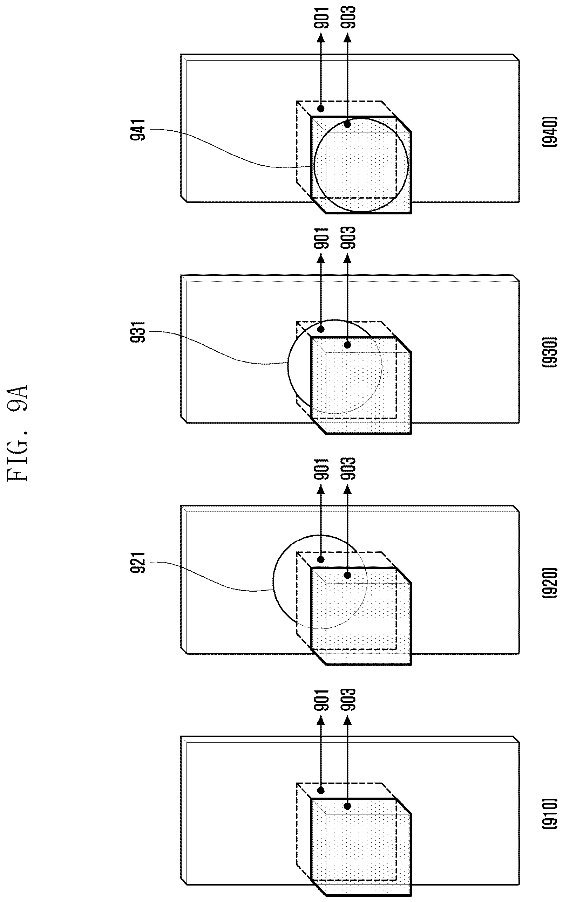

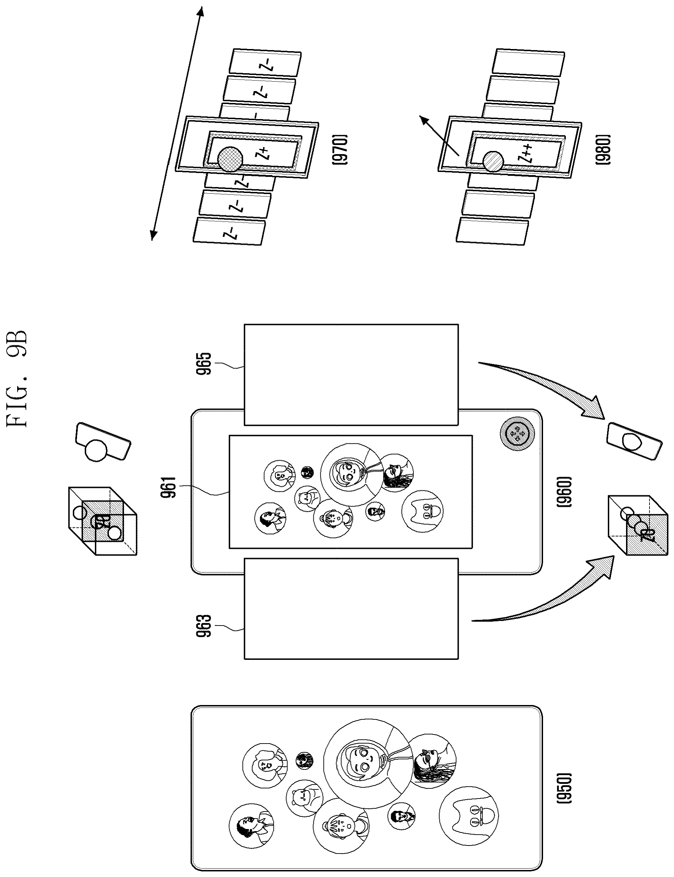

FIGS. 9A and 9B are diagrams illustrating an example of selecting a three-dimensional object through a control menu in an electronic device according to an embodiment.

Referring to FIG. 9A, a processor (e.g., the processor 120 in FIG. 1) of an electronic device (e.g., the electronic device 101 in FIG. 1) according to an embodiment may divide an area corresponding to a pointer (e.g., the pointer 801 in FIG. 8A to 8C) into a first highlight area 901 and a second highlight area 903 as in a first user interface 910. For example, the processor 120 may move a three-dimensional object 921 to the first highlight area 901 or the second highlight area 903, based on the movement of the electronic device 101, as in a second user interface 920. The processor 120 may snap a three-dimensional object 931 to the first highlight area 901, as in a third user interface 930. The snapping may indicate that the three-dimensional object 931 is moved to be inside the first highlight area 901. The processor 120 may, as in the fourth user interface 940, include a three-dimensional object 941 in the first highlight area 901 and the second highlight area 903, based on the movement of the electronic device 101. In case that the three-dimensional object 941 is included in the first highlight area 901 and the second highlight area 903, the processor 120 may execute a function corresponding to the three-dimensional object 941.

Referring to FIG. 9B, a processor 120 may display a sixth user interface 960, in case that a recent execution list is selected while a fifth user interface 950 is displayed. In the sixth user interface 960, a first application execution screen 961, a second application execution screen 963, and a third application execution screen 965 may be displayed as three-dimensional objects. The processor 120 may detect the movement of the electronic device 101 while the sixth user interface 960 is displayed in a state in which a designated touch area of the control menu is selected. The processor 120 may select a three-dimensional object, based on the movement (e.g., in the z direction) of the electronic device 101. For example, the processor 120 may move the execution screen 961 of the first application to the z+ to z- range to select same, or move the execution screen 963 of the second application and the execution screen 965 of the third application to the z0 to z- range to select same.

For example, in case that the electronic device 101 moves to the left and right 970, the processor 120 may snap the execution screen 961 of the first application to a z+ highlight area (e.g., the first highlight area 901 in FIG. 9A). The snapping may indicate that the execution screen 961 of the first application is moved to be brought into the z+ highlight area. In addition, in case that the electronic device 101 is moved in the z-axis direction (980), the processor 120 may include the execution screen 961 of the first application in the first highlight area 901 and the second highlight area 903. In case that the execution screen 961 of the first application is included in the first highlight area 901 and the second highlight area 903, the processor 120 may display the execution screen 961 of the first application on the entire area of the display 160.

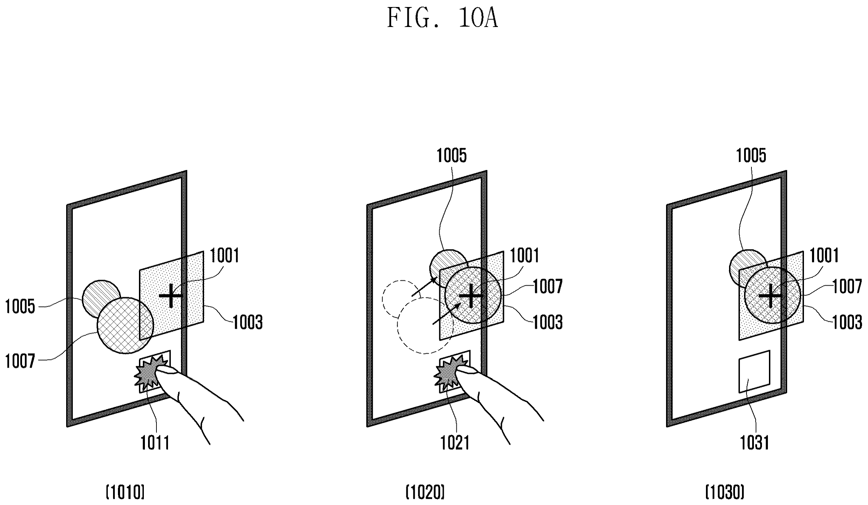

FIGS. 10A to 10C are diagrams illustrating an example of selecting a three-dimensional object through a control menu in an electronic device according to an embodiment.

Referring to FIG. 10A, while a first user interface 1010 is displayed on a display (e.g., the display 160 in FIG. 1), a processor (e.g., the processor 120 in FIG. 1) of an electronic device (e.g., the electronic device 101 in FIG. 1) according to an embodiment may detect a user input for a designated touch area 1011 of a control menu. The first user interface 1010 may include a pointer 1001, a first three-dimensional object 1005, or a second three-dimensional object 1007. The first three-dimensional object 1005 or the second three-dimensional object 1007 may include an icon of an application included in the home screen or content included in an execution screen of an application. A highlight area 1003 is an area corresponding to the pointer 1001, and the user may move the electronic device 101 to make a three-dimensional object to correspond to the highlight area 1003.

For example, the processor 120 may detect the movement of the electronic device 101 in a state in which a touch on the designated touch area 1011 in the first user interface 1010 is maintained. The processor 120 may display a second user interface 1020, based on the movement (e.g., z-direction movement) of the electronic device 101. For example, the second user interface 1020 may be an example illustrating that a second three-dimensional object 1007 corresponding to a first layer (e.g., first depth information) in the z-axis direction is automatically included in the highlight area 1003. While a touch on the designated touch area 1021 is maintained, the processor 120 may select the second three-dimensional object 1007 adjacent to (e.g., having the shortest x and y distances to) the pointer 1001 and may move the second three-dimensional object 1007 to the highlight area 1003. The processor 120 may also move the position of the first three-dimensional object 1005, based on the position movement of the second three-dimensional object 1007.

In the first user interface 1010, the second three-dimensional object 1007 is closer to the pointer 1001 than the first three-dimensional object 1005, and thus the processor 120 may select the second three-dimensional object 1007. In case that a touch on a designated touch area 1031 is released, the processor 120 may display a third user interface 1030. In case that the second three-dimensional object 1007 is included in the highlight area 1003 as in the third user interface 1030, the processor 120 may determine that the second three-dimensional object 1007 has been selected, and may perform a function corresponding to the second three-dimensional object 1007.

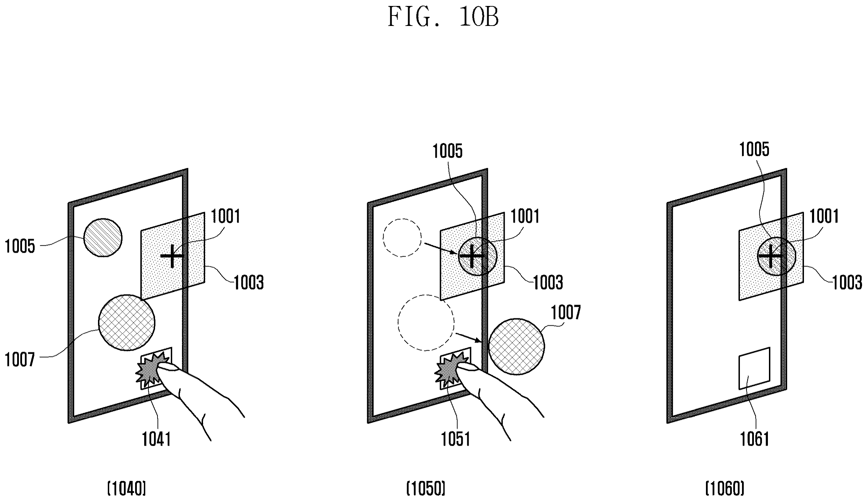

Referring to FIG. 10B, the processor 120 may detect a user input for a designated touch area 1041 of a control menu while a fourth user interface 1040 is displayed on a display 160. The fourth user interface 1040 may include a pointer 1001, a first three-dimensional object 1005, or a second three-dimensional object 1007. The first three-dimensional object 1005 or the second three-dimensional object 1007 may include an icon of an application included in the home screen or content included in an execution screen of the application. The highlight area 1003 is an area corresponding to the pointer 1001, and the user may move the electronic device 101 to make a three-dimensional object to correspond to the highlight area 1003.

For example, the processor 120 may detect the movement of the electronic device 101 in a state in which a touch on the designated touch area 1041 in the fourth user interface 1040 is maintained. The processor 120 may display a fifth user interface 1050, based on the movement (e.g., a z-direction movement) of the electronic device 101. For example, the fifth user interface 1050 may be an example illustrating that the first three-dimensional object 1005 corresponding to a second layer (e.g., second depth information) in the z-axis direction is automatically included in the highlight area 1003. While a touch in the designated touch area 1051 is maintained, the processor 120 may select a first three-dimensional object 1005 adjacent to (e.g., having the smallest x, y distance from) the pointer 1001, and may move the first three-dimensional object 1005 to the highlight area 1003. The processor 120 may also move the position of the second three-dimensional object 1007, based on the movement of the position of the first three-dimensional object 1005.

In the fourth user interface 1040, the first three-dimensional object 1005 is closer to the pointer 1001 than the second three-dimensional object 1007, and thus the processor 120 may select the first three-dimensional object 1005. In case that the touch on the designated touch area 1061 is released, the processor 120 may display a sixth user interface 1060. In case that the first three-dimensional object 1005 is included in the highlight area 1003 as in the sixth user interface 1060, the processor 120 may determine that the first three-dimensional object 1005 has been selected, and may perform a function corresponding to the first three-dimensional object 1005.

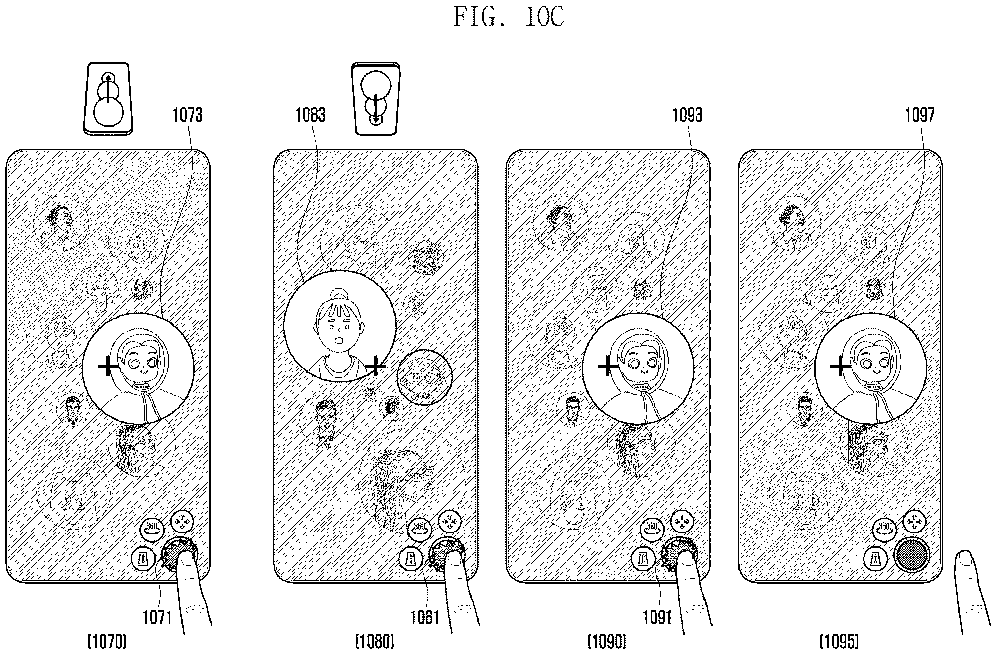

Referring to FIG. 10C, the processor 120 may detect a user input for a designated touch area 1071 of a control menu while a seventh user interface 1070 is displayed on the display 160. The seventh user interface 1070 may be an example illustrating that a three-dimensional object 1073 adjacent to the pointer and the other three-dimensional objects are displayed differently. The processor 120 may make the remaining three-dimensional objects, excluding the three-dimensional object 1073 adjacent to the pointer, blurry (or shaded), as in the seventh user interface 1070.

The processor 120 may detect movement of the electronic device 101 in a state in which a touch on the designated touch area 1071 in the seventh user interface 1070 is maintained. The processor 120 may display an eighth user interface 1080, based on the movement (e.g., +z direction movement) of the electronic device 101. For example, the eighth user interface 1080 may be an example illustrating that a three-dimensional object 1083 corresponding to a second layer (e.g., a second depth information) in the +z-axis direction is automatically included in the highlight area. The processor 120 may detect the movement of the electronic device 101 in a state in which a touch on the designated touch area 1081 in the eighth user interface 1080 is maintained. The processor 120 may display a ninth user interface 1090, based on the movement (e.g., -z direction movement) of the electronic device 101. For example, the ninth user interface 1090 may an example illustrating that a three-dimensional object 1093 corresponding to a first layer (e.g., first depth information) is automatically included in the highlight area in the -z-axis direction. In case that the touch on the designated touch area 1091 in the ninth user interface 1090 is released, the processor 120 may display a tenth user interface 1095. In case that the three-dimensional object 1097 is included in the highlight area as in the 10th user interface 1095, the processor 120 may determine that the three-dimensional object 1097 has been selected, and may perform a function corresponding to the three-dimensional object 1097.

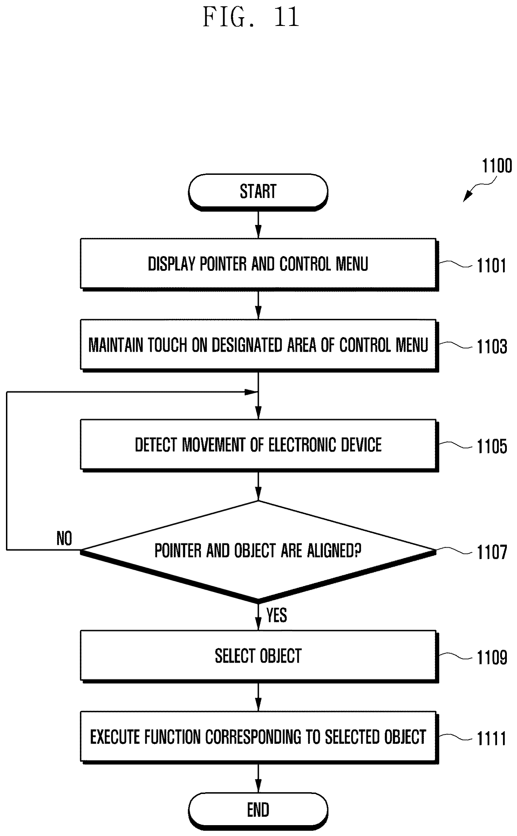

FIG. 11 is a flowchart 1100 illustrating a method of selecting a three-dimensional object through a control menu of an electronic device according to an embodiment.

Referring to FIG. 11, in operation 1101, a processor (e.g., the processor 120 in FIG. 1) of an electronic device (e.g., the electronic device 101 in FIG. 1) according to an embodiment may display a pointer and a control menu. The pointer (or cursor) may be configured to select a three-dimensional object displayed on a display (e.g., the display 160 in FIG. 1). The control menu may be an item for controlling a user interface including at least one three-dimensional object. The control menu (e.g., the control menu 237 in FIG. 2) may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2). The control menu may be displayed two-dimensionally, or may be displayed three-dimensionally. The control menu may further include a designated area (e.g., the designated touch area 1071 in FIG. 10C).

In operation 1103, the processor 120 may maintain the touch on the designated area of the control menu. In order to select a three-dimensional object desired by the user, the user may move the electronic device 101 while touching a designated area of the control menu.

In operation 1105, the processor 120 may detect a movement of the electronic device 101. The movement of the electronic device 101 may be acquired (or detected) by using a sensor module (e.g., the sensor module 176 in FIG. 1) included in the electronic device 101. For example, the sensor module 176 may include a 6-axis sensor obtained by combining a gyroscope sensor and an acceleration sensor, or a 9-axis sensor obtained by combining a gyroscope sensor, an acceleration sensor, and a geomagnetic sensor. The user may move the electronic device 101 without releasing a user input of touching a designated area of the control menu, in a state in which the user input is maintained.

In operation 1107, the processor 120 may determine whether the pointer and the object are aligned. The alignment may indicate that the pointer and the object are aligned in a row. The object may refer to a three-dimensional object. In order to select the three-dimensional object, the user may align the pointer and the three-dimensional object in the x, y, and z-axis directions. The processor 120 may perform operation 1109 when the pointer and the object are aligned, and may perform operation 1105 when the pointer and the object are not aligned. In case that the pointer and the object are not aligned, the processor 120 may return to operation 1105 to detect the movement of the electronic device 101.

In case that the pointer and the object are aligned, in operation 1109, the processor 120 may select the object. In case that the pointer is positioned at the center of the three-dimensional object, the processor 120 may determine that the three-dimensional object has been selected. Alternatively, in case that the three-dimensional object is included in a highlight area (e.g., the highlight area 803 in FIGS. 8A to 8C) corresponding to the pointer, the processor 120 may determine that the three-dimensional object has been selected.

In operation 1111, the processor 120 may execute a function corresponding to the selected three-dimensional object. For example, in case that the selected three-dimensional object is a contact (e.g., a phone number), the processor 120 may attempt to make a call to the contact. Alternatively, in case that the selected three-dimensional object is a photo, the processor 120 may display the photo on the entire area of the display 160. In case that the three-dimensional object is included in the designated area of the display 160, the processor 120 may inform (e.g., notify) that the three-dimensional object is selectable.

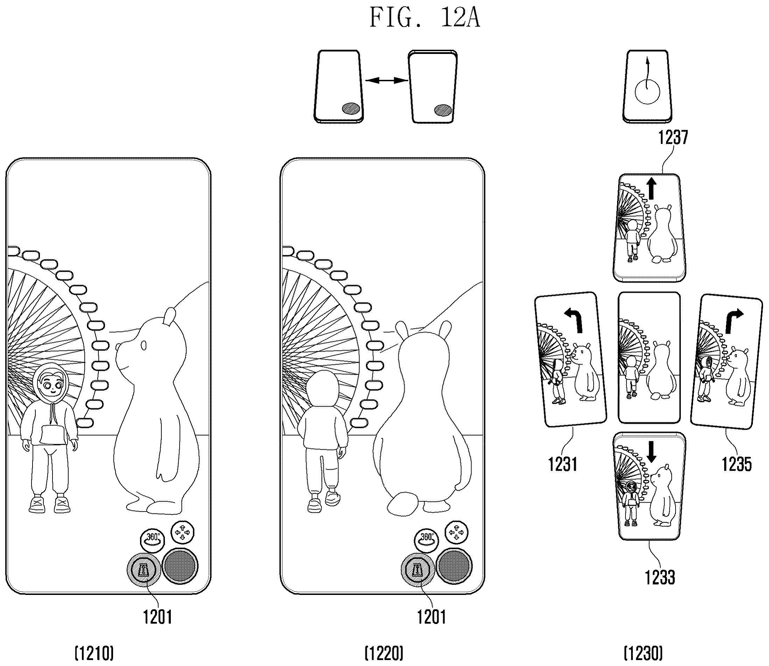

FIG. 12A is a diagram illustrating an example of selecting a control menu depth movement in a VR mode of an electronic device according to an embodiment.

Referring to FIG. 12A, a processor (e.g., the processor 120 in FIG. 1) of an electronic device (e.g., the electronic device 101 in FIG. 1) according to an embodiment may display a first user interface 1210 on a display (e.g., the display 160 in FIG. 1) in a virtual space mode. The first user interface 1210 may include at least one of at least one three-dimensional object (e.g., an avatar), a pointer, or a control menu. The control menu may include at least one of a depth movement item (e.g., the depth movement item 241 in FIG. 2), a camera view change item (e.g., the camera view change item 243 in FIG. 2), or a screen panning item (e.g., the screen panning item 245 in FIG. 2).

The processor 120 may detect a user input 1021 for the depth movement item 241 while the first user interface 1210 is displayed. In case that the user input 1021 for the depth movement item 241 is maintained, the processor 120 may detect a movement of the electronic device 101. That is, the user may move the electronic device 101 forward or backward from the user or move the electronic device 101 upward, downward, leftward, or rightward with respect to the user. The processor 120 may display a second user interface 1220, based on the movement of the electronic device 101.

The processor 120 may display various user interfaces 1230 according to the movement of the electronic device 101 in a state in which a touch on the depth movement item 241 is maintained. Various user interfaces 1230 may include a first screen 1231 corresponding to the leftward movement of the electronic device 101, a second screen 1233 corresponding to the rearward movement (e.g., approaching the user) of the electronic device 101, a third screen 1235 corresponding to the rightward movement of the electronic device 101, and a fourth screen 1237 corresponding to the forward movement (e.g., moving away from the user) of the electronic device 101.

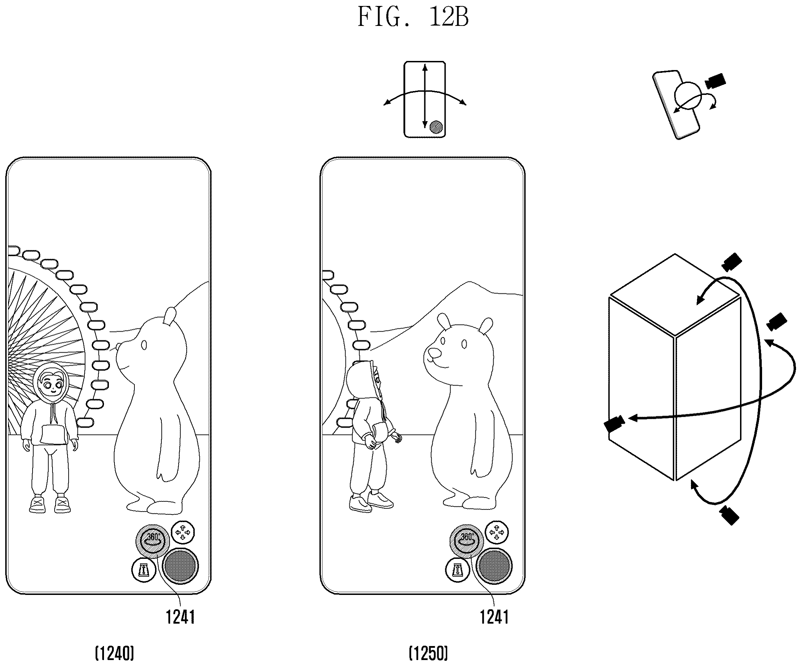

FIG. 12B is a diagram illustrating an example of selecting a camera view change of a control menu in a VR mode of an electronic device according to an embodiment.

Referring to FIG. 12B, the processor 120 may display a fourth user interface 1240 on a display 160 in a virtual space mode. The fourth user interface 1040 may include at least one of at least one three-dimensional object (e.g., an avatar), a pointer, or a control menu. The processor 120 may detect a user input 1041 for a camera view change item 243 while the fourth user interface 1240 is displayed. The processor 120 may detect the movement of the electronic device 101 in case that the user input 1041 for the camera view change item 243 is maintained. That is, the user may move the electronic device 101 forward or backward from the user, or move the electronic device 101 upward, downward, leftward, or rightward with respect to the user. The processor 120 may display a fifth user interface 1250, based on a movement of the electronic device 101. The processor 120 may change a camera view based on the movement of the electronic device 101, and may display the fifth user interface 1250 corresponding to the changed camera view.

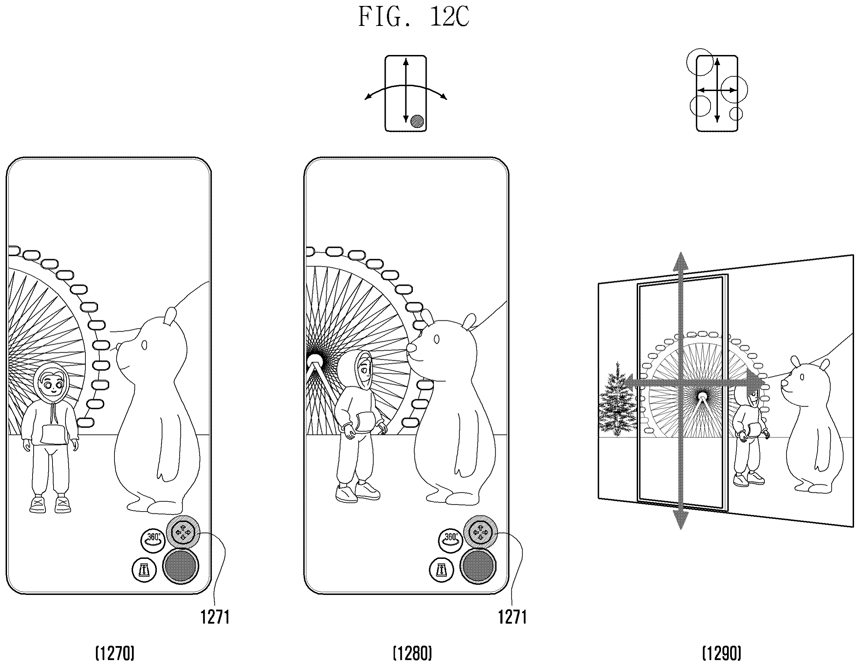

FIG. 12C is a diagram illustrating an example of selecting a screen movement of a control menu in a VR mode of an electronic device according to an embodiment.

Referring to FIG. 12C, a processor 120 may display a seventh user interface 1270 on a display 160 in a virtual space mode. The seventh user interface 1070 may include at least one of at least one three-dimensional object (e.g., an avatar), a pointer, or a control menu. The processor 120 may detect a user input 1271 for the screen panning item 245 while the seventh user interface 1270 is displayed. In case that the user input 1271 for the screen panning item 245 is maintained, the processor 120 may detect the movement of the electronic device 101. That is, the user may move the electronic device 101 forward or backward from the user, or move the electronic device 101 upward, downward, leftward, or rightward with respect to the user. The processor 120 may display an eighth user interface 1280, based on the movement of the electronic device 101. The processor 120 may change a user interface displayed on the display 160, based on the movement of the electronic device 101. The processor 120 may display the eighth user interface 1280 in the entire screen configuration area 1290, based on the movement of the electronic device 101.

An operation method of an electronic device 101 according to an embodiment of the disclosure may include detecting a user input for invoking a control menu while a three-dimensional (stereoscopic) object is displayed on a display 160 of the electronic device, displaying the control menu on the display in response to the detected user input, detecting a touch selecting an option item of the control menu, detecting the movement of the electronic device by using the sensor module 176 of the electronic device while the touch on the selected option item is maintained, and changing a user interface displayed on the display, based on the detected movement of the electronic device in case that the touch on the selected option item is released.

The displaying of the control menu may include, in response to the detected user input, displaying the control menu in a corner edge area of the display, and displaying a pointer at the center of the display.

The method may further include, in case that a depth movement is selected as an option item of the control menu, acquiring first sensing data in a depth direction from the sensor module, and changing depth information of a three-dimensional object displayed on the display according to the touch release, based on the acquired first sensing data.

The method may further include, in case that a camera view change is selected as an option item of the control menu, acquiring second sensing data in a depth direction from the sensor module, changing a camera view, based on the acquired second sensing data, and changing the user interface, based on the changed camera view.

The method may further include, in case that a screen panning is selected as an option item of the control menu, acquiring third sensing data from the sensor module, and changing the user interface, based on the acquired third sensing data.

The method may further include, in case that a three-dimensional object corresponds to the pointer, selecting the three-dimensional object, based on the acquired sensing data.

The method may further include, in case that the touch on the selected option item is released, executing a function corresponding to the selected three-dimensional object.

The method may further include, in case that a three-dimensional object is positioned adjacent to a highlight area corresponding to the pointer based on the acquired sensing data, selecting the positioned three-dimensional object, and in case that the touch release is detected, executing a function corresponding to the selected three-dimensional object.

The method may further include moving, to the highlight area, the three-dimensional object disposed adjacent to the highlight area, and in case that the three-dimensional object is aligned with the highlight area, selecting the three-dimensional object.

The method may further include moving, to the highlight area, a first three-dimensional object disposed adjacent to the highlight area, and moving the position of a second three-dimensional object displayed on the display, based on the movement of the first three-dimensional object.

The embodiments of the disclosure disclosed in the specification and drawings are only presented as specific examples to easily explain the technical content according to the embodiments of the disclosure and help understanding of the embodiments of the disclosure, and are not intended to limit the scope of the embodiments of the disclosure. Therefore, the scope of various embodiments of the disclosure should be construed to include all changes or modifications derived based on the technical idea of the disclosure, in addition to the embodiments disclosed herein.

## Claims

1. An electronic device (101) comprising:
a display (160);
a sensor module (176);
a memory (130) configured to store instructions; and
a processor (120),
wherein the instructions, when executed by the processor, cause the electronic device to:
while a three-dimensional (stereoscopic) object is displayed on the display, detect a user input for invoking a control menu;
display the control menu on the display in response to the detected user input; detect a touch selecting an option item of the control menu;
while the touch on the selected option item is maintained, detect movement of the electronic device by using the sensor module; and
in case that the touch on the selected option item is released, change a user interface displayed on the display based on the detected movement of the electronic device.

2. The electronic device of claim 1, wherein the instructions, when executed by the processor, cause the electronic device to:
display the control menu in a corner edge area of the display in response to the detected user input; and
display a pointer at the center of the display.

3. The electronic device of claim 1, wherein the instructions, when executed by the processor, cause the electronic device to:
in case that a depth movement is selected as an option item of the control menu, acquire first sensing data in a depth direction from the sensor module; and
change depth information of a three-dimensional object displayed on the display according to the touch release, based on the acquired first sensing data.

4. The electronic device of claim 1, wherein the instructions, when executed by the processor, cause the electronic device to:
in case that a camera view change is selected as an option item of the control menu, acquire second sensing data in a depth direction from the sensor module;
change a camera view, based on the acquired second sensing data; and
change the user interface, based on the changed camera view.

5. The electronic device of claim 1, wherein the instructions, when executed by the processor, cause the electronic device to:
in case that a screen panning is selected as an option item of the control menu, acquire third sensing data from the sensor module; and
change the user interface, based on the acquired third sensing data.

6. The electronic device of claim 2, wherein the instructions, when executed by the processor, cause the electronic device to,
in case that a three-dimensional object corresponds to the pointer based on the acquired sensing data, select the three-dimensional object.

7. The electronic device of claim 6, wherein the instructions, when executed by the processor, cause the electronic device to,
in case that the touch on the selected option item is released, execute a function corresponding to the selected three-dimensional object.

8. The electronic device of claim 2, wherein the instructions, when executed by the processor, cause the electronic device to:
in case that a three-dimensional object is positioned adjacent to a highlight area corresponding to the pointer based on the acquired sensing data, select the positioned three-dimensional object; and
in case that the touch release is detected, execute a function corresponding to the selected three-dimensional object.

9. The electronic device of claim 8, wherein the instructions, when executed by the processor, cause the electronic device to:
move, to the highlight area, the three-dimensional object disposed adjacent to the highlight area; and
in case that the three-dimensional object is aligned with the highlight area, select the three-dimensional object.

10. The electronic device of claim 8, wherein the instructions, when executed by the processor, cause the electronic device to:
move, to the highlight area, a first three-dimensional object disposed adjacent to the highlight area; and
move the position of a second three-dimensional object displayed on the display, based on the movement of the first three-dimensional object.

11. An operation method of an electronic device (101), the method comprising:
while a three-dimensional (stereoscopic) object is displayed on a display (160) of the electronic device, detecting a user input for invoking a control menu;
displaying the control menu on the display in response to the detected user input;
detecting a touch selecting an option item of the control menu;
while the touch on the selected option item is maintained, detecting movement of the electronic device by using the sensor module (176); and
in case that the touch on the selected option item is released, changing a user interface displayed on the display based on the detected movement of the electronic device.

12. The method of claim 11, wherein the displaying of the control menu comprises,
in response to the detected user input, displaying the control menu in a corner edge area of the display, and displaying a pointer at the center of the display.

13. The method of claim 11, further comprising:
in case that a depth movement is selected as an option item of the control menu, acquiring first sensing data in a depth direction from the sensor module; and
changing depth information of a three-dimensional object displayed on the display according to the touch release, based on the acquired first sensing data.

14. The method of claim 11, further comprising:
in case that a camera view change is selected as an option item of the control menu, acquiring second sensing data in a depth direction from the sensor module;
changing a camera view, based on the acquired second sensing data; and
changing the user interface, based on the changed camera view.

15. The method of claim 11, comprising:
in case that a screen panning is selected as an option item of the control menu, acquiring third sensing data from the sensor module; and
changing the user interface, based on the acquired third sensing data.
